# EUROPEAN PATENT SPECIFICATION

(11) **EP 3 832 144 B1**
(45) Date of publication and mention of the grant of the patent: **28.09.2022**
(21) Application number: 20212299.0
(22) Date of filing: 07.12.2020
(51) Int. Cl.: F04D 29/44, F02C 3/08

(54) **DIFFUSER PIPE WITH RADIALLY-OUTWARD EXIT**
DIFFUSORROHR MIT RADIAL NACH AUSSEN GERICHTETEM AUSGANG
CONDUIT DIFFUSEUR AVEC SORTIE RADIALE VERS L'EXTÉRIEUR

(30) Priority: 05.12.2019 US 201916704476
(43) Date of publication of application: 09.06.2021
(73) Proprietor: Pratt & Whitney Canada Corp., Longueuil, Québec J4G 1A1 (CA)
(72) Inventor: KISUN, Gavin, Longueuil, Québec J4G 1A1 (CA); YU, Hong, Longueuil, Québec J4G 1A1 (CA); DUONG, Hien, Longueuil, Québec J4G 1A1 (CA)
(74) Representative: Dehns

(56) References cited:
- US-A- 3 420 435
- US-A1- 2014 369 814

## Description

### TECHNICAL FIELD

The present invention relates generally to centrifugal compressors for gas turbine engines, and more particularly to diffuser pipes for such centrifugal compressors.

### BACKGROUND

Diffuser pipes are provided in certain gas turbine engines for diffusing a flow of high speed air received from an impeller of a centrifugal compressor and directing the flow to a downstream component, such as an annular chamber containing the combustor. The diffuser pipes are typically circumferentially arranged at a periphery of the impeller, and are designed to transform kinetic energy of the flow into pressure energy. Diffuser pipes seek to provide a uniform exit flow with minimal distortion, as it is preferable for flame stability, low combustor loss, reduced hot spots etc. Some diffuser pipes discharge air to impinge directly on the combustor, which may increase losses in combustor stability. A prior art diffuser is disclosed in US 2014/0369814 A1.

### SUMMARY

According to a first aspect of the invention, there is disclosed a compressor diffuser for a compressor section of a gas turbine engine, the compressor section having a center axis, the compressor diffuser comprising: diffuser pipes in a circumferential array about the center axis, one or more of the diffuser pipes having a tubular body with a first portion extending from an inlet of said diffuser pipe, a second portion extending along a generally axial direction relative to the center axis, and a bend portion fluidly connecting the first and second portions, an exit segment of the second portion defining a pipe outlet, the exit segment curved radially outwardly relative to the center axis.

In an embodiment of the above, the second portion includes an axial segment terminating at the exit segment, the axial segment being spaced from the center axis a radial distance remaining constant over a length of the axial segment.

In a further embodiment of the above, the pipe outlet faces in a direction that has a radially outward component relative to the center axis.

In a further embodiment of the above, the tubular body of each of the diffuser pipes has a pipe center axis extending therethrough, the pipe center axis along the exit segment defining an exit angle relative to the center axis being a maximum of 60 degrees.

In a further embodiment of the above, the tubular body has a length measured from the inlet to the pipe outlet, the length of the exit segment not exceeding 25% of the length of the tubular body.

In a further embodiment of the above, the tubular body has side walls spaced circumferentially apart and extending between a radially-inner wall and a radially-outer wall, both the radially inner and outer walls along the exit segment extending radially outward relative to the center axis to the pipe outlet.

In a further embodiment of the above, the tubular body has side walls spaced circumferentially apart and extending between a radially-inner wall and a radially-outer wall, one of the radially inner wall and the radially outer wall along the exit segment extending radially outward relative to the center axis to the pipe outlet.

In a further embodiment of the above, the tubular body has side walls spaced circumferentially apart and extending between a radially-inner wall and a radially-outer wall, the radially-inner wall along the exit segment extending radially outward relative to the center axis to the pipe outlet.

In a further embodiment of the above, the tubular body along the exit segment is open radially-outwardly from the radially-inner wall and between the side walls.

In a further embodiment of the above, the tubular body along the exit segment is open radially-outwardly from the radially-inner wall and between the side walls, the side walls along the exit segment being smaller than the side walls along a remainder of the tubular body.

In a further embodiment of the above, the exit segment curves circumferentially relative to the axial segment.

In a further embodiment of the above, the tubular body has a pipe center axis extending therethrough, an exit plane being normal to the pipe center axis at the pipe outlet, the exit plane being oblique to the center axis.

A further embodiment is a gas turbine engine, comprising: a compressor having an impeller rotatable about a center axis, and having a radial impeller outlet and a compressor diffuser according to the first aspect of the invention or its further embodiments.

In a further embodiment of the above, the combustor is a reverse-flow combustor.

According to a second aspect of the invention, there is disclosed a method of supplying air from a compressor section of a gas turbine engine to a combustor of the gas turbine engine, the method comprising: conveying air from an outlet of an impeller of the compressor section toward the combustor through a diffuser pipe, the air being conveyed through the diffuser pipe along a generally radial direction, then along an axial direction generally parallel to a center axis of the compressor diffuser, and then radially outwardly from the center axis through a pipe outlet of the diffuser pipe and toward the combustor.

In an embodiment of the method above, the method further comprises discharging air from the pipe outlet to avoid directly impinging on the combustor.

### BRIEF DESCRIPTION OF THE DRAWINGS

Reference is now made to the accompanying figures in which:
Fig. 1 is a schematic cross-sectional view of a gas turbine engine;
Fig. 2 is a perspective view of an impeller and diffuser pipes of a centrifugal compressor of the gas turbine of Fig. 1;
Fig. 3A is a perspective view of one of the diffuser pipes of Fig. 2;
Fig. 3B is another perspective view of the diffuser pipe of Fig. 3A;
Fig. 3C an enlarged perspective view of an end of the diffuser pipe in Fig. 3A;
Fig. 4 is graph plotting radial distance of one of the diffuser pipe of Fig. 3A along a length of said diffuser pipe;
Fig. 5 is a perspective view of another diffuser pipe of a centrifugal compressor of the gas turbine of Fig. 1;
Fig. 6 is a perspective view of another diffuser pipe of a centrifugal compressor of the gas turbine of Fig. 1;
Fig. 7A is a perspective view of another diffuser pipe of a centrifugal compressor of the gas turbine of Fig. 1; and
Fig. 7B is another perspective view of the diffuser pipe of Fig. 7A.

### DETAILED DESCRIPTION

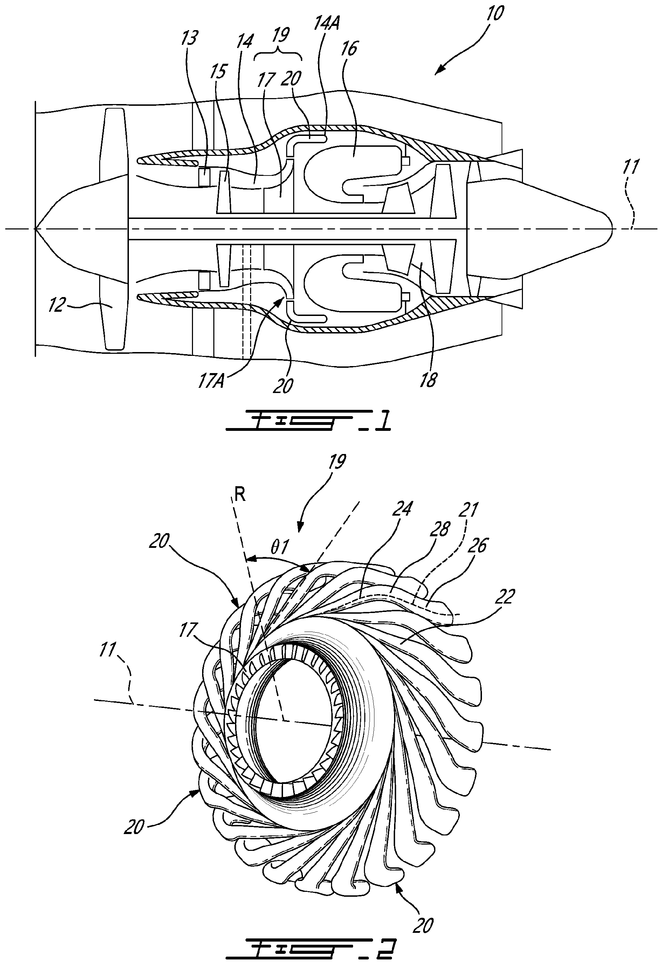

Fig. 1 illustrates a gas turbine engine 10 of a type preferably provided for use in subsonic flight, generally comprising in serial flow communication along an engine center axis 11 a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. The compressor section 14 may include a plurality of stators 13 and rotors 15 (only one stator 13 and rotor 15 being shown in Fig. 1), and it may include a centrifugal compressor 19.

The centrifugal compressor 19 of the compressor section 14 includes an impeller 17 with vanes and a compressor diffuser 14A. The compressor diffuser 14A includes a plurality of diffuser pipes 20, which are located downstream of the impeller 17 and circumferentially disposed about a periphery of a radial outlet 17A of the impeller 17. The diffuser pipes 20 convert high kinetic energy at the impeller 17 exit to static pressure by slowing down fluid flow exiting the impeller. The diffuser pipes 20 also redirect the air flow from a radial orientation to an axial orientation (i.e. aligned with the engine axis 11). In most cases, the Mach number of the flow entering the diffuser pipe 20 may be at or near sonic, while the Mach number exiting the diffuser pipe 20 may be less than 0.25 to enable stable air/fuel mixing, and light/re-light in the combustor 16.

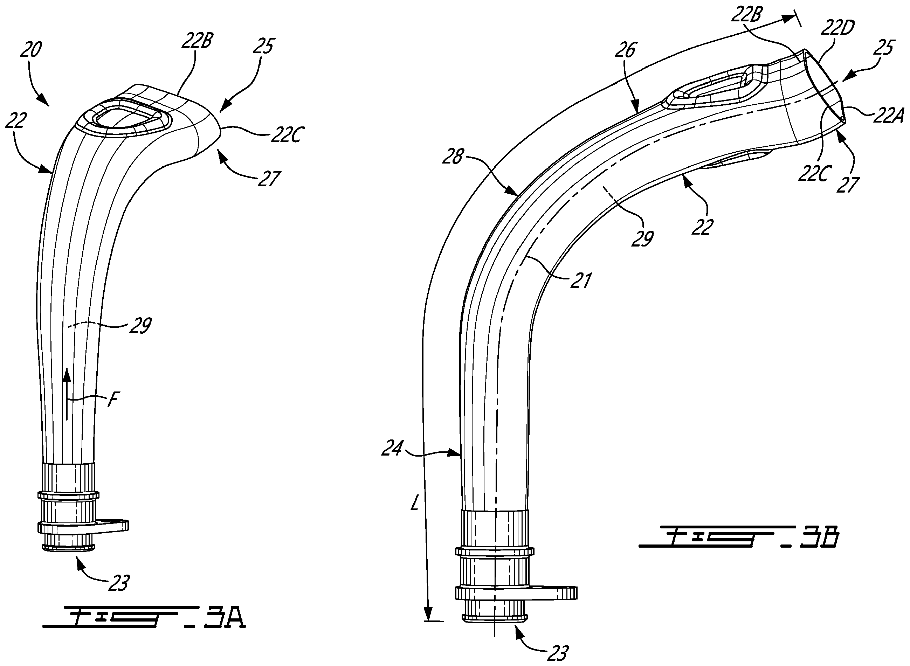

Fig. 2 shows the impeller 17 and the plurality of diffuser pipes 20, also referred to as "fishtail diffuser pipes", of the centrifugal compressor 19. Each of the diffuser pipes 20 includes a diverging (in a downstream direction) tubular body 22, formed, in one embodiment, of sheet metal. The enclosed tubular body 22 defines a flow passage 29 (see Fig. 3A) extending the length of the diffuser pipe 20 through which the compressed fluid flow is conveyed. The tubular body 22 includes a first portion 24 extending tangentially and radially from the center axis 11 (i.e. in a direction that has both tangential and radial components) along a radial axis R extending from the engine axis 11, and is sometimes referred to herein as a generally radial portion 24. An open end is provided at an upstream end of the tubular body 22 and forms an inlet 23 (see Fig. 3A) of the diffuser pipe 20. In some embodiments, such as the one shown in Fig. 2, the first portion 24 also extends generally tangentially from the periphery and radial outlet 17A of the impeller 17 to remove swirl from the flow exiting the impeller 17. The radially and tangentially-extending first portion 24 in Fig. 2 is inclined at an angle θ1 relative to the radial axis R. The angle θ1 may be selected to correspond to a direction of fluid flow at the exit of the blades of the impeller 17, such as to facilitate transition of the flow from the impeller 17 to the diffuser pipes 20.

The tubular body 22 of the diffuser pipes 20 also includes a second portion 26, which is disposed generally axially and is sometimes referred to herein as a generally axial portion 26. The generally axial portion 26 is connected to the first portion 24 by an out-of-plane curved or bend portion 28, sometimes referred to as the "elbow" of the diffuser pipe 20. An open end at the downstream end of the second portion 26 forms a pipe outlet 25 (see Fig. 3A) of the diffuser pipe 20. Preferably, but not necessarily, the first portion 24 and the second portion 26 of the diffuser pipes 20 are integrally formed together and extend substantially uninterrupted between each other, via the curved, bend portion 28.

The large radial velocity component of the flow exiting the impeller 17, and therefore entering the first portion 24 of each of the diffuser pipes 20, may be removed by shaping the diffuser pipe 20 with the bend portion 28, such that the flow is redirected axially through the second portion 26 before exiting via the pipe outlet 25 to the combustor 16. In Fig. 1, the combustor 16 is a reverse-flow combustor 16 positioned to receive fluid flow from the pipe outlet 25. It will thus be appreciated that the flow exiting the impeller 17 enters the inlet 23 and the upstream first portion 24 and flows along a generally radial first direction. At the outlet of the first portion 24, the flow enters the bend portion 28 which functions to turn the flow from a substantially radial direction to a substantially axial direction. The bend portion 28 may form a 90 degree bend. At the outlet of the bend portion 28, the flow enters the downstream second portion 26 and flows along a substantially axial second direction different from the generally radial first direction. By "generally radial", it is understood that the flow may have axial, radial, and/or circumferential velocity components, but that the axial and circumferential velocity components are much smaller in magnitude than the radial velocity component. Similarly, by "generally axial", it is understood that the flow may have axial, radial, and/or circumferential velocity components, but that the radial and circumferential velocity components are much smaller in magnitude than the axial velocity component.

Referring to Figs. 3A and 3B, the tubular body 22 of each diffuser pipe 20 has a radially inner wall 22A and a radially outer wall 22B. The tubular body 22 also has a first side wall 22C spaced circumferentially apart across the flow passage 29 from a second side wall 22D. The radially inner and outer walls 22A,22B and the first and second side walls 22C,22D meet and are connected to form the enclosed flow passage 29 extending through a length L of the tubular body 22, where the length L is defined from the inlet 23 to the pipe outlet 25. The radially inner wall 22A corresponds to the wall of the tubular body 22 that has the smallest turning radius at the bend portion 28, and the radially outer wall 22B corresponds to the wall of the tubular body 22 that has the largest turning radius at the bend portion 28.

The tubular body 22 diverges in the direction of fluid flow F therethrough, in that the internal flow passage 29 defined within the tubular body 22 increases in cross-sectional area along its length L which extends between the inlet 23 of the diffuser pipe 20 and the pipe outlet 25. This increase in cross-sectional area of the flow passage 29 through each diffuser pipe 20 may be continuous along the complete length L of the tubular body 22, or the cross-sectional area of the flow passage 29 may increase in gradual increments along the length L of the tubular body 22. In the illustrated embodiment, the cross-sectional area of the flow passage 29 defined within the tubular body 22 increases gradually and continuously along its length L, from the inlet 23 to the pipe outlet 25. The pipe outlet 25 is circumscribed by a peripheral edge of the diffuser pipe 20 at its exit, where the peripheral edge is defined by the inner, outer, and side walls 22A,22B,22C,22D. The direction of fluid flow F is generally along a pipe center axis 21 of the tubular body 22. The pipe center axis 21 extends through each of the first, second, and bend portions 24,26,28 and has the same orientation as these portions. The pipe center axis 21 is thus curved. In the illustrated embodiment, the pipe center axis 21 is equidistantly spaced from the radially inner and outer walls 22A,22B of the tubular body 22, and from the first and second side walls 22C,22D, along the length L of the tubular body 22.

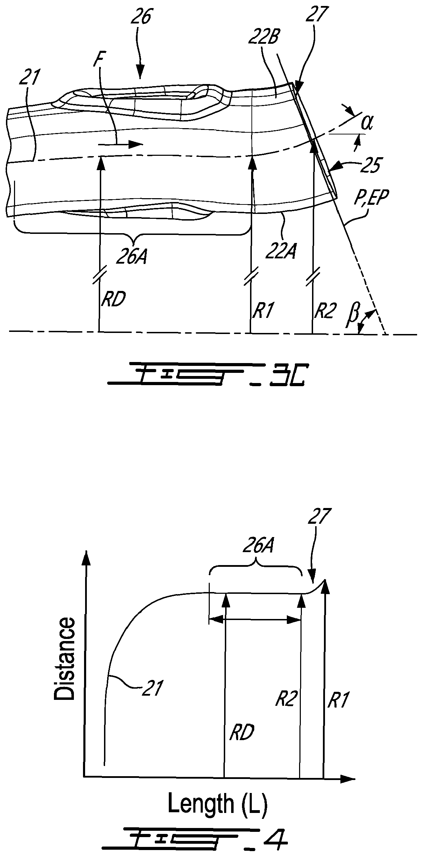

In an embodiment, the second portion 26 of the tubular body 22 has a section that is at a constant distance from the center axis 14. Referring to Figs. 3B and 3C, the axial, second portion 26 of the tubular body 22 has an axial segment 26A. The axial segment 26A is a portion of the second portion 26 that occupies some or all of the length of the second portion 26. In an embodiment, the axial segment 26A has a length of up to approximately 50% of the length L of the tubular body 22. In Fig. 3C, the axial segment 26A has a length between approximately 20% and 40% of the length L of the tubular body 22. In Fig. 3C, the axial segment 26A has a length between approximately 20% and 25% of the length L of the tubular body 22. In the illustrated embodiment, the axial segment 26A occupies less than all of the length of the second portion 26. The axial segment 26A extends parallel to the center axis 11 of the engine 10, such that the fluid flow F has an orientation being parallel to the center axis 11 through the axial segment 26A. The axial segment 26A is the same radial distance from the center axis 11 over the length of the axial segment 26A. The axial segment 26A is a constant radial distance from the center axis 11 over the length of the axial segment 26A. The pipe center axis 21 along the axial segment 26A is the same radial distance from the center axis 11. A distance RD measured from the pipe center axis 21 to the center axis 11 has a constant value over the length of the axial segment 26A. Other features of the tubular body 22 may also, or alternatively, be the same radial distance from the center axis 11 along the axial segment 26A. For example, the radially inner wall 22A along the axial segment 26A may be the same radial distance from the center axis 11. For example, the radially outer wall 22B along the axial segment 26A may be the same radial distance from the center axis 11. The axial segment 26A is thus able to convey the fluid flow F axially, such that any radial or circumferential velocity components of the fluid flow F are much smaller in magnitude than the axial velocity component over the length of the axial segment 26A.

The tubular body 22 of each diffuser pipe 20 has an exit segment 27. The exit segment 27 is a downstream portion of the tubular body 22 through which the flow is conveyed. In the illustrated embodiment, the exit segment 27 extends axially from the axial segment 26A, such that the axial segment 26A has a downstream end at the exit segment 27. In the illustrated embodiment, the exit segment 27 extends over a portion of the length L of the tubular body 22, and is positioned downstream of the bend portion 28 and of the axial segment 26A. The exit segment 27 begins at a downstream end of the axial segment 26A and terminates at the pipe outlet 25. The exit segment 27 includes and defines the pipe outlet 25. The exit segment 27 is disposed entirely within the second portion 26 of the tubular body 22 in the illustrated embodiment and is a part thereof. The exit segment 27 is the last portion of the tubular body 22 through which the flow is conveyed. The exit segment 27 in an embodiment has a length that is a maximum of, or does not exceed, approximately 10% of the length L of the tubular body 22. The exit segment 27 in the illustrated embodiment is within the last 25% of the length L of the diffuser pipe 20. The exit segment 27 may be the last 10% of the length L of the diffuser pipe 20.

Referring to Figs. 3B and 3C, the exit segment 27 extends radially outward relative to the center axis 11 over its length from the axial segment 26A to the pipe outlet 25. The diffuser pipe 20 is thus "angled up" at its exit to direct the fluid flow F discharged from the diffuser pipe 20 in a radially outward direction. The diffuser pipe 20 in Figs. 3B to 3C thus has a section with a constant radius (i.e. the axial segment 26A) which precedes another section of the diffuser pipe 20 where the radial position of the diffuser pipe 20 is rapidly increased over a short distance leading to the exit of the diffuser pipe 20 (i.e. the exit segment 27). The diffuser pipe 20 has a localized bend or curve at the exit or end of the diffuser pipe 20 to direct the gas path at the exit of the diffuser pipe 20. Thus the fluid flow F is directed radially outwardly from the pipe outlet 25 after having flowed through the diffuser pipe 20 in a direction substantially parallel to the center axis 11.

The exit segment 27 thus forms a "vectored exit profile" of the diffuser pipe 20, thereby helping to provide air to the combustor 16 at specific flow directions and distributions. The diffuser pipe 20 is thus able to deflect or to direct the fluid flow F away from a liner of the combustor 16, which may allow the fluid flow F to avoid impinging directly on the liner of the combustor 16 when discharged from the diffuser pipes 20. By allowing the fluid flow F to avoid impinging directly on the downstream combustor 16, the diffuser pipes 20 and their exit segments 27 may help to reduce losses in the combustor and may help to improve combustor stability and durability. In an embodiment, the cross-sectional area distribution and the length L of the diffuser pipe 20 are the same as that of a diffuser pipe without the exit segment 27. In such an embodiment, the radially-outwardly oriented exit segment 27 allows for a more compact arrangement of the diffuser pipe 20 and the combustor 16, because the diffuser pipe 20 may be placed closer to the combustor 16 since direct impingement of the fluid flow F on the liner of the combustor 16 is reduced or eliminated entirely.

Referring to Figs. 3B and 3C, one or more portions of the exit segment 27 curve radially outwardly toward the pipe outlet 25. The exit segment 27 thus has one or more portions which function to turn the fluid flow F to discharge the fluid flow F from the pipe outlet 25 in a radially-outward direction. Such a portion of the exit segment 27 begins at the exit of the axial segment 26A and curves or turns radially-outward therefrom toward the pipe outlet 25. The radial position of the pipe center axis 21 relative to the center axis 11 at the pipe outlet 25 is thus radially further outward of the radial position of the pipe center axis 21 at the inlet of the exit segment 27. A distance R1 measured from the pipe center axis 21 to the center axis 11 at the inlet of the exit segment 27 is less than the radial distance R2 from the pipe center axis 21 to the center axis 11 at the pipe outlet 25. This allows the fluid flow F to exit the diffuser pipe 20 in an radially outward direction. In an alternate embodiment, the exit segment 27 is curved radially outwardly and the diffuser pipe 20 is oriented in such a manner that the fluid flow F is still able to exit the diffuser pipe 20 in an axial direction or a radially inward direction.

In Figs. 3B and 3C, both the radially inner and outer walls 22A,22B along the exit segment 27 are curved radially outwardly, from the inlet of the exit segment 27 to the pipe outlet 25. In Figs. 3B and 3C, both the radially inner and outer walls 22A,2B are turned radially outwardly. In other embodiments, one example of which is described below, only one of the radially inner wall 22A and the radially outer wall 22B along the exit segment 27 is curved radially outward from the axial segment 26A to the pipe outlet 25. In an alternate embodiment, one or both of the radially inner and outer walls 22A,22B are straight along the exit segment 27, and have a curvature of zero. In such an embodiment, one or both of the radially inner and outer walls 22A,22B extend radially outwardly from the axial segment 26A to the pipe outlet 25 as linear segments.

Referring to Fig. 3C, planes P intersect the tubular body 22 (only one being shown in Fig. 3C for clarity). Each plane P is defined by the pipe center axis 21, and is normal thereto. The orientation of the planes P with respect to a coordinate system of the engine 10 thus varies over the length L of the tubular body 22. It will be appreciated that there may be a large number of planes P for a given tubular body 22. One of these planes P is an exit plane EP, which intersects and extends through the pipe outlet 25. The exit plane EP extends between the radially inner and outer walls 22A,22B, and is tangential to both. The exit plane EP is oblique to the center axis 11. The exit plane EP intersects the center axis 11 and forms an angle with the center axis 11 that is neither parallel nor a right angle. Thus, the plane in which the pipe outlet 25 lies is oblique to the center axis 11. The planes P along the axial segment 26A intersect the center axis 11 at a right angle.

Referring to Fig. 3C, the pipe center axis 21 along the exit segment 27 is oriented at an exit angle α relative to the center axis 11. The exit angle α is greater than zero degree and less than ninety degrees (i.e. purely radial to the center axis 11). In Fig. 3C, the exit angle α is maximum of, or does not exceed, 60 degrees. In Fig. 3C, the oblique angle β of the exit plane EP relative to the center axis 11 is maximum of, or does not exceed, 60 degrees. In Fig. 3C, the oblique angle β of the exit plane EP relative to the center axis 11 is about 30 degrees. The effect of the exit segment 27 is to change the orientation of the pipe center axis 21 at the pipe outlet 25, compared to its orientation through the axial segment 26A.

Fig. 4 shows a planar profile of the tubular body 22 in a plane that intersects the pipe center axis 21, and in which lie the center axis 11 of the engine 10 and radial line extending from the center axis 11. Fig. 4 shows a two-dimensional projection of the curved and/or twisting pipe center axis 21 onto the intersecting plane. It will be appreciated that other features of the tubular body 22 (e.g. one of the walls 22A,22B,22C,22D) may also be projected onto the intersecting plane. The planar profile in Fig. 4 is a two-dimensional representation of the pipe center axis 21 in the intersecting plane over the length L of the tubular body 22.

Fig. 4 plots the normalized radial distance of the pipe center axis 21 (the y-axis) measured from the center axis 11 of the engine 10 at different points along the length L of the tubular body 22 (the x-axis). The y-axis in Fig. 4 corresponds to a radial orientation relative to the center axis 11, and the x-axis corresponds to an axial orientation. The distance RD of the axial segment 26A from the center axis 11 remains constant over the length of the axial segment 26A. The axial segment 26A is a constant radial distance from the center axis 11. The axial segment 26A is the same radial distance RD from the center axis 11 along the entire length of the axial segment 26A. Fig. 4 shows the radially-outward displacement of the pipe center axis 21 over the length of the exit segment 27. The distance R1 of the inlet of the exit segment 27 from the center axis 11 is less than the radial distance R2 of the pipe outlet 25 from the center axis 11.

Referring to Fig. 4, a slope of the planar profile is shown. In Fig. 4, the slope is the change in the radial distance of the pipe center axis 21 from the center axis 11 over a length along the center axis 11. A negative slope indicates that the radial distance of the pipe center axis 21 is decreasing over the length in question, while a positive slope indicates that the radial distance of the pipe center axis 21 is increasing over the length in question. A slope of the exit segment 27 in the plane shown in Fig. 4 is positive. The radial distance of the exit segment 27 from the center axis 11 increases over its length. The radial distance of the exit segment 27 is highest at the pipe outlet 25, and lowest at an upstream end of the exit segment 27. The slope of the axial segment 26A in the plane shown in Fig. 4 is zero, indicating that the radial distance of the axial segment 26A from the center axis 11 does not vary substantially over its length. The axial segment 26A is therefore flat in the plane shown in Fig. 4. In an alternate embodiment, the axial segment 26A is not flat.

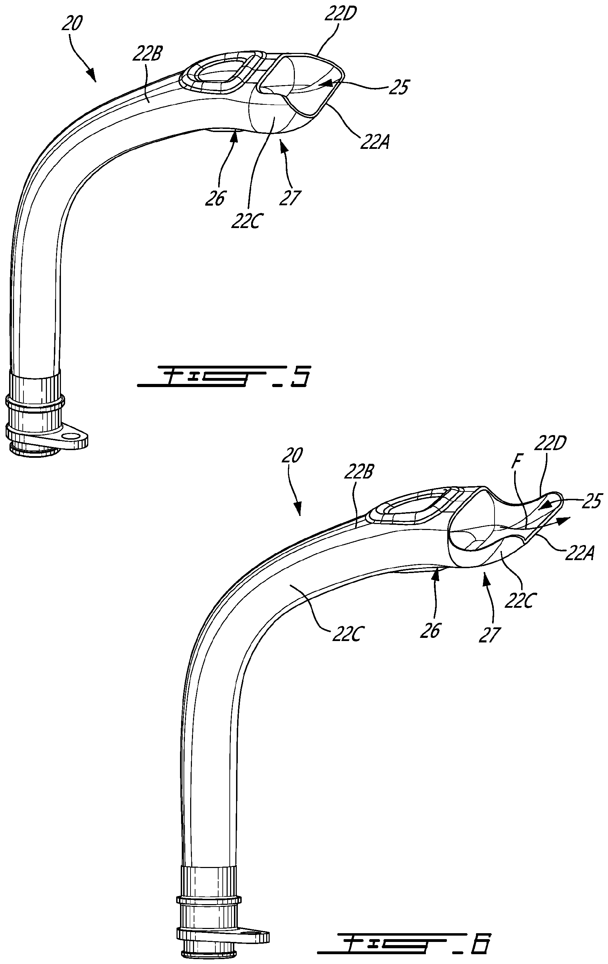

Figs. 5 and 6 show embodiments of the diffuser pipe 20 in which only one of the radially inner wall 22A and the radially outer wall 22B along the exit segment 27 are curved or extend radially outward from the axial segment 26A to the pipe outlet 25. The diffuser pipes 20 shown in Figs. 5 and 6 are similar to the diffuser pipe 20 shown in Figs. 3A to 3C, and therefore the description and reference numbers of the diffuser pipe 20 in Figs. 3A to 3C apply *mutatis mutandis* to the diffuser pipes 20 shown in Figs. 5 and 6. In Figs. 5 and 6, only the radially-inner wall 22A along the exit segment 27 extends radially outward relative to the center axis 11 from the axial segment 26A to the pipe outlet 25. In Figs. 5 and 6, the radially-outer wall 22B is not present in the exit segment 27. In Figs. 5 and 6, the exit segment 27 is free of the radially outer wall 22B. In Figs. 5 and 6, the length of the radially outer wall 22B is equal to the length L of the diffuser pipe 20 minus the length of the exit segment 27. Thus Figs. 5 and 6 show an exit segment 27 for a diffuser pipe 20 with first and second side walls 22C,22D and only the radially inner wall 22A being turned radially outwardly. In Fig. 5, the tubular body 22 along the exit segment 27 is open radially-outwardly from the radially-inner wall 22A and between the first and second side walls 22C,22D. The side walls 22C,22D and the radially inner wall 22A delimit the open area. In Fig. 6, the tubular body 22 along the exit segment 27 is open radially-outwardly from the radially-inner wall 22A and between the first and second side walls 22C,22D. The first and second side walls 22C,22D in Fig. 6 along the exit segment 27 are smaller than the first and second side walls 22C,22D along a remainder of the tubular body 22. The first and second side walls 22C,22D along the exit segment 27 extend less radially outwardly than the first and second side walls 22C,22D along the remainder of the tubular body 22. In Figs. 5 and 6, only the "bottom" (i.e. the radially inner wall 22A) of the diffuser pipe 20 in the exit segment 27 is used to direct the fluid flow F in a radially outward direction and away from the combustor 16.

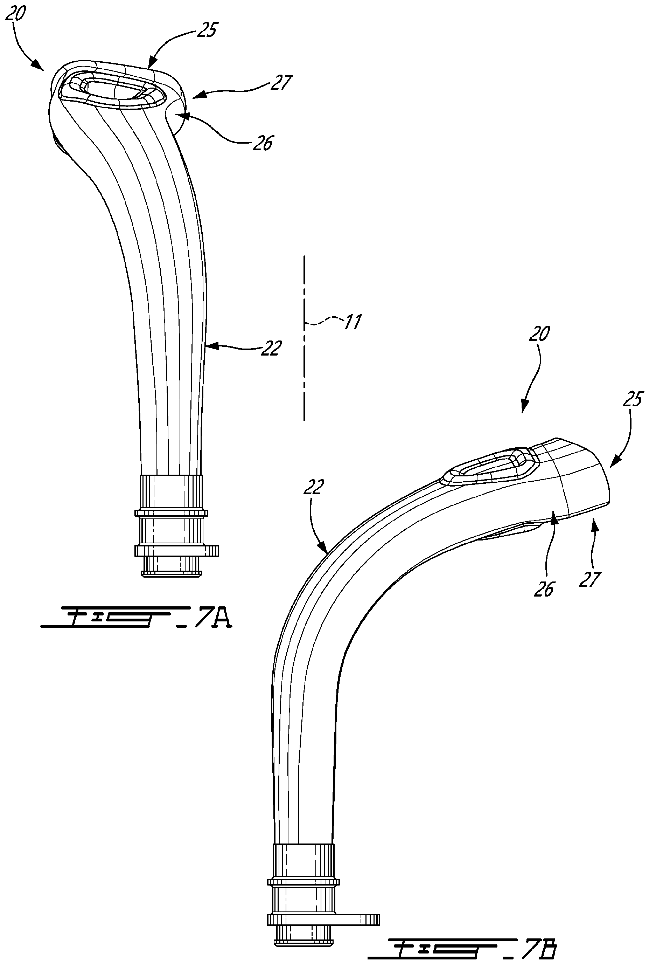

Figs. 7A and 7B show embodiments of the diffuser pipe 20 in which the exit segment 27 is curved or extends radially outward from the axial segment 26A to the pipe outlet 25 and also has a circumferential twist. The diffuser pipe 20 shown in Figs. 7A and 7B is similar to the diffuser pipe 20 shown in Figs. 3A to 3C, and therefore the description and reference numbers of the diffuser pipe 20 in Figs. 3A to 3C apply *mutatis mutandis* to the diffuser pipe 20 shown in Figs. 7A and 7B. Referring to Figs. 7A and 7B, in addition to extending radially outward, the exit segment 27 also has a circumferential twist when compared to a portion of the tubular body 22 immediately upstream of the exit segment 27, such as the axial segment 26A. The flow path through the diffuser pipe 20 is twisted and changed to remove swirl in flow. As shown in Fig. 7A, the exit segment 27 turns circumferentially toward the engine center axis 11, when compared to more upstream segments of the second portion 26 of the tubular body 22, to convey flow from the outlet 25, and to help remove swirl from the flow. The exit segment 27 may turn circumferentially away the engine center axis 11 to change the swirl angle in fluid flow F exiting the diffuser pipe 20.

Referring to Figs. 3A to 3C, there is disclosed a method of supplying air from trhe compressor section 14 to the combustor 16. The method includes conveying air from the outlet 17A of an impeller 17 toward the combustor 16 through a diffuser pipe 20. The air is conveyed through the diffuser pipe 20 along a generally radial direction, then along an axial direction generally parallel to the center axis 11, and then radially outwardly from the center axis through the pipe outlet 25 toward the combustor 16. In an embodiment, the method includes discharging air from the pipe outlet 25 to avoid directly impinging on the combustor 16. In an embodiment, the method includes discharging air from the pipe outlet 25 toward a position being radially outward of the combustor 16. This may be done by deflecting the fluid flow F away from liner of the combustor 16 to avoid directly impinging against the liner.

The tubular body 22 may be made with advanced manufacturing or conventional methods. Using advanced manufacturing such as additive manufacturing or MIM (metal injection molding), the vector controlled exit segment 27 can be printed or injected as part of the diffuser pipe 20. Using conventional methods such as stamping, the exit segment 27 shape may be incorporated into the tooling for the diffuser pipe 20.

The diffuser pipe 20 and its exit segment 27 may be incorporated into existing engines 10 without affecting the surrounding hardware. An example of this would deswirl cascades that are brazed to the gas generator case (GGC). The diffuser pipe 20 and its exit segment 27 may be designed such that all clearances with existing hardware (GGC, GGC tubes, and the combustor 16) may be maintained. The diffuser pipe 20 and its exit segment 27 may allow for a lower FSC delta associated with incorporating a vector controlled shape as part of the diffuser pipe 20. The estimated FSC delta related to incorporating an exit vector controlled pipe may be roughly 10%, which may be a cheaper alternative to conventional cascade vanes. The diffuser pipe 20 may also be incorporated into existing engine or derivative engines for the purpose of cost reduction, and/or aero performance improvements.

The above description is meant to be exemplary only, and one skilled in the art will recognize that changes may be made to the embodiments described without departing from the scope of the invention disclosed. Still other modifications which fall within the scope of the present invention will be apparent to those skilled in the art, the scope of the invention is defined by the following claims.

## Claims

1. A compressor diffuser (14A) for a gas turbine engine (10) defining a center axis (11), the compressor diffuser (14A) comprising diffuser pipes (20) in a circumferential array about the center axis (11), one or more of the diffuser pipes (20) having a tubular body (22) with a first portion (24) extending from an inlet (23) of said diffuser pipe (20), a second portion (26) extending along a generally axial direction relative to the center axis (11), and a bend portion (28) fluidly connecting the first and second portions (24, 26), an exit segment (27) of the second portion (26) defining a pipe outlet (25), **characterised in that** the exit segment (27) is curved radially outwardly relative to the center axis (11).

2. The compressor diffuser of claim 1, wherein the second portion (26) includes an axial segment (26A) terminating at the exit segment (27), the axial segment (26A) being spaced from the center axis (11) a radial distance remaining constant over a length of the axial segment (26A), and optionally wherein the exit segment (27) curves circumferentially relative to the axial segment (26A).

3. The compressor diffuser of claim 1 or 2, wherein the pipe outlet (25) faces in a direction that has a radially outward component relative to the center axis (11).

4. The compressor diffuser of any preceding claim, wherein the tubular body (22) of each of the diffuser pipes (20) has a pipe center axis (21) extending therethrough, the pipe center axis (21) along the exit segment (27) defining an exit angle (α) relative to the center axis (21) being a maximum of 60 degrees.

5. The compressor diffuser of any preceding claim, wherein the tubular body (22) has a length measured from the inlet to the pipe outlet, the length of the exit segment not exceeding 25% of the length of the tubular body.

6. The compressor diffuser of any preceding claim, wherein the tubular body (22) has side walls (22C, 22D) spaced circumferentially apart and extending between a radially-inner wall (22A) and a radially-outer wall (22B), the radially-inner wall (22A) along the exit segment (27) extending radially outward relative to the center axis (11) to the pipe outlet (25).

7. The compressor diffuser of claim 6, wherein the tubular body (22) along the exit segment (27) is open radially-outwardly from the radially-inner wall (22A) and between the side walls (22C, 22D).

8. The compressor diffuser of claim 6, wherein the tubular body (22) along the exit segment (27) is open radially-outwardly from the radially-inner wall (22A) and between the side walls (22C, 22D), the side walls (22C, 22D) along the exit segment (27) being smaller than the side walls (22B, 22D) along a remainder of the tubular body (22).

9. The compressor diffuser of any of claims 1 to 5, wherein the tubular body (22) has side walls (22C, 22D) spaced circumferentially apart and extending between a radially-inner wall (22A) and a radially-outer wall (22B), both the radially inner and outer walls (22A, 22B) along the exit segment (27) extending radially outward relative to the center axis (11) to the pipe outlet (25).

10. The compressor diffuser of any of claims 1 to 5, wherein the tubular body (22) has side walls (22C, 22D) spaced circumferentially apart and extending between a radially-inner wall (22A) and a radially-outer wall (22B), one of the radially inner wall (22A) and the radially outer wall (22B) along the exit segment (27) extending radially outward relative to the center axis (11) to the pipe outlet (25).

11. The compressor diffuser of any preceding claim, wherein the tubular body (22) has a pipe center axis (21) extending therethrough, an exit plane (EP) being normal to the pipe center axis (21) at the pipe outlet (25), and the exit plane (EP) being oblique to the center axis (11).

12. A gas turbine engine (10) comprising:
a compressor (14, 19) having an impeller (17) rotatable about the center axis (11), and having a radial impeller outlet (17A);
the compressor diffuser (14A) as defined in any one of the preceding claims, the diffuser pipes (22) of the compressor diffuser (14A) fluidly connected to receive fluid from the radial impeller outlet (17A); and
a combustor (16) downstream of the compressor diffuser (14A).

13. The gas turbine engine of claim 12, wherein the combustor (16) is a reverse-flow combustor.

14. A method of supplying air from a compressor section (14) of a gas turbine engine (10) to a combustor (16) of the gas turbine engine (10), the method comprising: conveying air from an outlet (17A) of an impeller (17) of the compressor section (14) toward the combustor (16) through a diffuser pipe (20), the air being conveyed through the diffuser pipe (20) along a generally radial direction, then along an axial direction generally parallel to a center axis (11) of a compressor diffuser (14A), and then radially outwardly from the center axis (11) through a pipe outlet (25) of the diffuser pipe (20) and toward the combustor (16).

15. The method of claim 14, comprising discharging air from the pipe outlet (25) to avoid directly impinging on the combustor (16).

## Patentansprüche

1. Verdichterdiffusor (14A) für ein Gasturbinentriebwerk (10), der eine Mittelachse (11) definiert, wobei der Verdichterdiffusor (14A) Diffusorrohre (20) in einer Umfangsanordnung um die Mittelachse (11) umfasst, ein oder mehrere der Diffusorrohre (20) einen röhrenförmigen Körper (22) mit einem ersten Abschnitt (24), der sich von einem Einlass (23) des Diffusorrohrs (20) erstreckt, einem zweiten Abschnitt (26), der sich entlang einer allgemein axialen Richtung relativ zu der Mittelachse (11) erstreckt, und einem gebogenen Abschnitt (28), der den ersten und den zweiten Abschnitt (24, 26) fluidisch verbindet, aufweisen, wobei ein Austrittssegment (27) des zweiten Abschnitts (26) einen Rohrauslass (25) definiert, **dadurch gekennzeichnet, dass** das Austrittssegment (27) relativ zu der Mittelachse (11) radial nach außen gekrümmt ist.

2. Verdichterdiffusor nach Anspruch 1, wobei der zweite Abschnitt (26) ein axiales Segment (26A) aufweist, das an dem Austrittssegment (27) endet, wobei das axiale Segment (26A) von der Mittelachse (11) um einen radialen Abstand beabstandet ist, der über eine Länge des axialen Segments (26A) konstant bleibt, und wobei sich optional das Austrittssegment (27) in Umfangsrichtung relativ zu dem axialen Segment (26A) krümmt.

3. Verdichterdiffusor nach Anspruch 1 oder 2, wobei der Rohrauslass (25) in eine Richtung weist, die eine radial nach außen gerichtete Komponente relativ zu der Mittelachse (11) aufweist.

4. Verdichterdiffusor nach einem der vorhergehenden Ansprüche, wobei der röhrenförmige Körper (22) jedes der Diffusorrohre (20) eine Rohrmittelachse (21) aufweist, die sich durch ihn hindurch erstreckt, wobei die Rohrmittelachse (21) entlang des Austrittssegments (27) einen Austrittswinkel (α) relativ zu der Mittelachse (21) definiert, der maximal 60 Grad beträgt.

5. Verdichterdiffusor nach einem der vorhergehenden Ansprüche, wobei der röhrenförmige Körper (22) eine Länge hat, die von dem Einlass bis zu dem Rohrauslass gemessen wird, wobei die Länge des Austrittssegments 25 % der Länge des röhrenförmigen Körpers nicht überschreitet.

6. Verdichterdiffusor nach einem der vorhergehenden Ansprüche, wobei der röhrenförmige Körper (22) Seitenwände (22C, 22D) aufweist, die in Umfangsrichtung voneinander beabstandet sind und sich zwischen einer radial inneren Wand (22A) und einer radial äußeren Wand (22B) erstrecken, wobei sich die radial innere Wand (22A) entlang des Austrittssegments (27) relativ zu der Mittelachse (11) radial nach außen zu dem Rohrauslass (25) erstreckt.

7. Verdichterdiffusor nach Anspruch 6, wobei der röhrenförmige Körper (22) entlang des Austrittssegments (27) radial nach außen von der radial inneren Wand (22A) und zwischen den Seitenwänden (22C, 22D) offen ist.

8. Verdichterdiffusor nach Anspruch 6, wobei der röhrenförmige Körper (22) entlang des Austrittssegments (27) radial nach außen von der radial inneren Wand (22A) und zwischen den Seitenwänden (22C, 22D) offen ist, wobei die Seitenwände (22C, 22D) entlang des Austrittssegments (27) kleiner sind als die Seitenwände (22B, 22D) entlang eines Rests des röhrenförmigen Körpers (22).

9. Verdichterdiffusor nach einem der Ansprüche 1 bis 5, wobei der röhrenförmige Körper (22) Seitenwände (22C, 22D) aufweist, die in Umfangsrichtung voneinander beabstandet sind und sich zwischen einer radial inneren Wand (22A) und einer radial äußeren Wand (22B) erstrecken, wobei sich sowohl die radial inneren als auch die äußeren Wände (22A, 22B) entlang des Austrittssegments (27) relativ zu der Mittelachse (11) radial nach außen zu dem Rohrauslass (25) erstrecken.

10. Verdichterdiffusor nach einem der Ansprüche 1 bis 5, wobei der röhrenförmige Körper (22) Seitenwände (22C, 22D) aufweist, die in Umfangsrichtung voneinander beabstandet sind und sich zwischen einer radial inneren Wand (22A) und einer radial äußeren Wand (22B) erstrecken, wobei sich eine der radial inneren Wand (22A) und der radial äußeren Wand (22B) entlang des Austrittssegments (27) relativ zu der Mittelachse (11) radial nach außen zu dem Rohrauslass (25) erstreckt.

11. Verdichterdiffusor nach einem der vorhergehenden Ansprüche, wobei der röhrenförmige Körper (22) eine Rohrmittelachse (21) aufweist, die sich durch ihn hindurch erstreckt, wobei eine Austrittsebene (EP) senkrecht zu der Rohrmittelachse (21) an dem Rohrauslass (25) ist und die Austrittsebene (EP) schräg zu der Mittelachse (11) ist.

12. Gasturbinentriebwerk (10) umfassend:
einen Verdichter (14, 19) mit einem Laufrad (17), das um die Mittelachse (11) drehbar ist, und mit einem radialen Laufradauslass (17A);
den Verdichterdiffusor (14A) nach einem der vorhergehenden Ansprüche, wobei die Diffusorrohre (22) des Verdichterdiffusors (14A) fluidisch verbunden sind, um Fluid von dem radialen Laufradauslass (17A) aufzunehmen; und
eine Brennkammer (16) stromabwärts des Verdichterdiffusors (14A) .

13. Gasturbinentriebwerk nach Anspruch 12, wobei die Brennkammer (16) eine Gegenstrombrennkammer ist.

14. Verfahren zum Zuführen von Luft von einem Verdichterabschnitt (14) eines Gasturbinentriebwerks (10) zu einer Brennkammer (16) des Gasturbinentriebwerks (10), wobei das Verfahren Folgendes umfasst: Fördern von Luft von einem Auslass (17A) eines Laufrads (17) des Verdichterabschnitts (14) durch ein Diffusorrohr (20) zu der Brennkammer (16), wobei die Luft durch das Diffusorrohr (20) entlang einer allgemein radialen Richtung und dann entlang einer axialen Richtung allgemein parallel zu einer Mittelachse (11) eines Verdichterdiffusors (14A) und dann radial nach außen von der Mittelachse (11) durch einen Rohrauslass (25) des Diffusorrohrs (20) und zu der Brennkammer (16) befördert wird.

15. Verfahren nach Anspruch 14, das das Abführen von Luft aus dem Rohrauslass (25) umfasst, um ein direktes Auftreffen auf die Brennkammer (16) zu vermeiden.

## Revendications

1. Diffuseur de compresseur (14A) pour un moteur à turbine à gaz (10) définissant un axe central (11), le diffuseur de compresseur (14A) comprenant des conduits diffuseurs (20) dans un réseau circonférentiel autour de l'axe central (11), un ou plusieurs des conduits diffuseurs (20) ayant un corps tubulaire (22) avec une première partie (24) s'étendant à partir d'une entrée (23) dudit conduit diffuseur (20), une seconde partie (26) s'étendant le long d'une direction généralement axiale par rapport à l'axe central (11), et une partie coudée (28) reliant fluidiquement les première et seconde parties (24, 26), un segment de sortie (27) de la seconde partie (26) définissant une sortie de conduit (25), **caractérisé en ce que** le segment de sortie (27) est incurvé radialement vers l'extérieur par rapport à l'axe central (11).

2. Diffuseur de compresseur selon la revendication 1, dans lequel la seconde partie (26) comporte un segment axial (26A) se terminant au niveau du segment de sortie (27), le segment axial (26A) étant espacé de l'axe central (11) d'une distance radiale restant constante sur une longueur du segment axial (26A), et éventuellement dans lequel le segment de sortie (27) s'incurve circonférentiellement par rapport au segment axial (26A) .

3. Diffuseur de compresseur selon la revendication 1 ou 2, dans lequel la sortie de conduit (25) est orientée dans une direction qui a une composante radialement vers l'extérieur par rapport à l'axe central (11).

4. Diffuseur de compresseur selon une quelconque revendication précédente, dans lequel le corps tubulaire (22) de chacun des conduits diffuseurs (20) a un axe central de conduit (21) s'étendant à travers celui-ci, l'axe central de conduit (21) le long du segment de sortie (27) définissant un angle de sortie (a) par rapport à l'axe central (21) étant au maximum de 60 degrés.

5. Diffuseur de compresseur selon une quelconque revendication précédente, dans lequel le corps tubulaire (22) a une longueur mesurée de l'entrée à la sortie de conduit, la longueur du segment de sortie n'excédant pas 25 % de la longueur du corps tubulaire.

6. Diffuseur de compresseur selon une quelconque revendication précédente, dans lequel le corps tubulaire (22) a des parois latérales (22C, 22D) espacées circonférentiellement et s'étendant entre une paroi radialement interne (22A) et une paroi radialement externe (22B), la paroi radialement interne (22A) le long du segment de sortie (27) s'étendant radialement vers l'extérieur par rapport à l'axe central (11) jusqu'à la sortie de conduit (25).

7. Diffuseur de compresseur selon la revendication 6, dans lequel le corps tubulaire (22) le long du segment de sortie (27) est ouvert radialement vers l'extérieur à partir de la paroi radialement interne (22A) et entre les parois latérales (22C, 22D) .

8. Diffuseur de compresseur selon la revendication 6, dans lequel le corps tubulaire (22) le long du segment de sortie (27) est ouvert radialement vers l'extérieur à partir de la paroi radialement interne (22A) et entre les parois latérales (22C, 22D), les parois latérales (22C, 22D) le long du segment de sortie (27) étant plus petites que les parois latérales (22B, 22D) le long d'un reste du corps tubulaire (22).

9. Diffuseur de compresseur selon l'une quelconque des revendications 1 à 5, dans lequel le corps tubulaire (22) a des parois latérales (22C, 22D) espacées circonférentiellement et s'étendant entre une paroi radialement interne (22A) et une paroi radialement externe (22B), les parois radialement interne et externe (22A, 22B) le long du segment de sortie (27) s'étendant radialement vers l'extérieur par rapport à l'axe central (11) jusqu'à la sortie de conduit (25).

10. Diffuseur de compresseur selon l'une quelconque des revendications 1 à 5, dans lequel le corps tubulaire (22) a des parois latérales (22C, 22D) espacées circonférentiellement et s'étendant entre une paroi radialement interne (22A) et une paroi radialement externe (22B), une parmi la paroi radialement interne (22A) et la paroi radialement externe (22B) le long du segment de sortie (27) s'étendant radialement vers l'extérieur par rapport à l'axe central (11) jusqu'à la sortie de conduit (25) .

11. Diffuseur de compresseur selon une quelconque revendication précédente, dans lequel le corps tubulaire (22) a un axe central de conduit (21) s'étendant à travers celui-ci, un plan de sortie (EP) étant perpendiculaire par rapport à l'axe central de conduit (21) au niveau de la sortie de conduit (25), et le plan de sortie (EP) étant oblique par rapport à l'axe central (11).

12. Moteur à turbine à gaz (10) comprenant :
un compresseur (14, 19) ayant une roue à aubes (17) pouvant tourner autour de l'axe central (11), et ayant une sortie de roue à aubes radiale (17A) ;
le diffuseur de compresseur (14A) selon l'une quelconque des revendications précédentes, les conduits diffuseurs (22) du diffuseur de compresseur (14A) étant reliés fluidiquement pour recevoir du fluide en provenance de la sortie de roue à aubes radiale (17A) ; et
une chambre de combustion (16) en aval du diffuseur de compresseur (14A).

13. Moteur à turbine à gaz selon la revendication 12, dans lequel la chambre de combustion (16) est une chambre de combustion à écoulement inversé.

14. Procédé d'alimentation en air d'une section de compresseur (14) d'un moteur à turbine à gaz (10) vers une chambre de combustion (16) du moteur à turbine à gaz (10), le procédé comprenant : le transport d'air depuis une sortie (17A) d'une roue à aubes (17) de la section compresseur (14) vers la chambre de combustion (16) à travers un conduit diffuseur (20), l'air étant transporté à travers le conduit diffuseur (20) le long d'une direction généralement radiale, puis le long d'une direction axiale généralement parallèle par rapport à un axe central (11) d'un diffuseur de compresseur (14A), et puis radialement vers l'extérieur à partir de l'axe central (11) à travers une sortie de conduit (25) du conduit diffuseur (20) et vers la chambre de combustion (16).

15. Procédé selon la revendication 14, comprenant l'évacuation d'air depuis la sortie de conduit (25) pour éviter d'impacter directement la chambre de combustion (16).
